Europäisches Patentamt

European Patent Office

Office européen des brevets

(19)

(11) Veröffentlichungsnummer: **0 201 028**
**B1**

(12) **EUROPÄISCHE PATENTSCHRIFT**

(45) Veröffentlichungstag der Patentschrift: 24.10.90

(51) Int. Cl.⁵: **G 02 B 6/28**

(21) Anmeldenummer: 86105875.8

(22) Anmeldetag: 29.04.86

(54) **Optischer Weichenbaustein.**

(30) Priorität: 03.05.85 DE 3515994

(43) Veröffentlichungstag der Anmeldung:
12.11.86 Patentblatt 86/46

(45) Bekanntmachung des Hinweises auf die
Patenterteilung:
24.10.90 Patentblatt 90/43

(84) Benannte Vertragsstaaten:
AT BE CH DE FR GB IT LI NL SE

(56) Entgegenhaltungen:
DE-A-3 229 570

APPLIED OPTICS, Band 20, Nr. 18, September
1981, Seiten 3128-3135, New York, US; G.
WINZER et al.: "Single-mode and multimode
all-fiber directional couplers for WDM"

PATENTS ABSTRACTS OF JAPAN, Band 8, Nr. 6
(P-247)1433r, 12. Januar 1984, Seite 113 P 247; &
JP - A - 58 169 124 (FUJITSU K.K.) 05.10.1983

(73) Patentinhaber: Siemens Aktiengesellschaft
Wittelsbacherplatz 2
D-8000 München 2 (DE)

(72) Erfinder: Frenkel, Ferdinand, Dr.
Elisenstrasse 10
D-8900 Augsburg (DE)
Erfinder: Haberland, Detlef, Dr.
Fichtenstrasse 14
D-8031 Steinebach (DE)
Erfinder: Haltenorth, Helmut, Dr.
Werner-Friedmann-Bogen 18
D-8000 München 70 (DE)

EP 0 201 028 B1

## Beschreibung

In einem Lichtwellenleiter-Kommunikationssystem kann eine hohe Ausnutzung der Übertragungskapazität eines Lichtwellenleiters durch einen Betrieb der Lichtleitfaser im bidirektionalen (oder unidirektionalen) Wellenlängenmultiplex (WDM—Wavelength Division Multiplex) erreicht werden, indem—bei bidirektionalem Wellenlägenmultiplex—für die Signalübertragung in der einen Übertragungsrichtung Lichtwellen mit einer niedriger Wellenlänge, etwa um 830 nm, und für die Signalübertragung in der anderen Übertragungsrichtung Lichtwellen mit einer höheren Wellenlänge, etwa um 1300 nm, verwendet werden; hierzu sind an den beiden Enden der Lichtwellenleiter-Strecke entsprechende optische Weichenbausteine vorzusehen, die jeweils mit einem einen elektro/optischen Wandler enthaltenden Sendebaustein und einem einen opto/elektrischen Wandler enthaltenden Empfangsbaustein gekoppelt sind.

Die Erfindung bezieht sich auf ein Verfahren zur Herstellung eines optischen Weichenbaustein (WDM-Coupler), der ein aus mehreren Schichten bestehendes, wellenlängenselektives Interferenzfilter (Strahlteilerschicht) aufweist, das im Hochvakuum auf eine schräge Glasfaserstirnfläche aufgedampft ist, und in dem zwei miteinander fluchtende, durch die schräg zur gemeinsamen Achse angeordnete wellenlängselektive Strahlteilerschicht , voneinander getrennte Lichtleitfasern sowie eine schräg zu den fluchtenden Lichtleitfasern verlaufende, mit ihrer Achse die genannte gemeinsame Achse in Höhe der wellenlängenselektiven Strahlteilerschicht schneidende und in eine Reflexionsrichtung der Strahlteilerschicht ausgerichtete weitere Lichtleitfaser vorgesehen ist, die, zur Fixierung und Justierung in V-förmigen Furchen von Substraten geführt, zwischen Glaskörpern eingekittet sind (DE-OS 30 12 184; Applied Optics 20(1981)18, 3128...3135). Zur Erhöhung der optischen Nebensprechdämpfung solcher Weichenbausteine werden bei den Empfangs-Lichtleitfasern gesonderte Bandfilterplättchen vorgesehen (Applied Optics, a.a.O.); in entsprechender Weise können Filterplättchen auch in bidirektionalen Lichtwellenleiter-Übertragungssystemen ohne derartige Weichenbausteine vorgesehen sein (US—A—4300811).

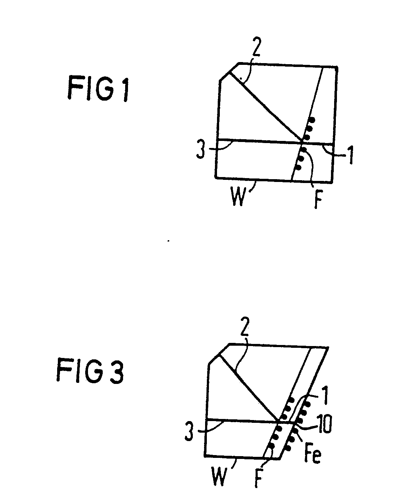

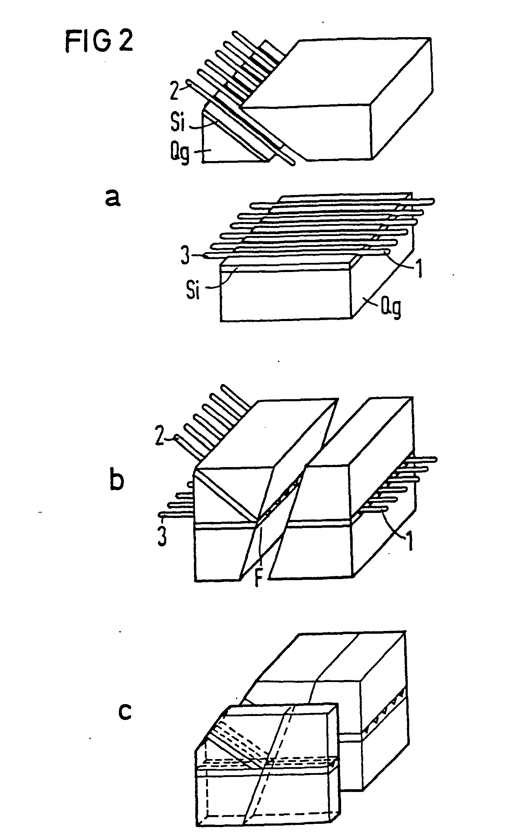

In einem mit zwei optischen Weichenbausteinen der angegebenen Art aufgebauten bidirektionalen Lichtwellenleiter-Übertragungssystem können, wie dies etwa in IEEE Journal of Lightwave Technology, LT-2(1984)Oct. No. 5, 675—681, insbes. Fig. 1 oben, angegeben wird und in ähnlicher Weise auch in FR—A—2509479, insbes. Fig. 2, angedeutet ist, die Sendebausteine und ebenso die Empfangsbausteine an den beiden Enden der Lichtwellenleiter-Strecke jeweils an die gleiche Lichtleitfaser des jeweiligen der beiden, mit Strahlteilerschichten mit den beiden für die beiden Übertragungsrichtung verwendeten Lichtwellenlängen entsprechend gegeneinander versetzter Filtercharakteristik versehenen Weichenbausteine angekoppelt sein.

Dies ermöglicht es, an den beiden Enden der optischen Übertragungsstrecke (jeweils Sendebaustein, Empfangsbaustein und Weichenbaustein umfassende) Sende-Empfangs-Module einheitlich strukturierten Aufbaus einsetzen zu können; bei der Fertigung solcher Module können entsprechend einheitliche Montage-, Justier- u./o. Prüfeinrichtungen zur Anwendung kommen.

Die mit den Strahlteilerschichten erreichte optische Nebensprechdämpfung von beispielsweise etwa 20 dB kann mit Hilfe der gesonderten Bandfilterplättchen erhöht werden, die vor den Empfangsbausteinen angeordnet sind; die Einfügung solcher Filterplättchen bringt allerdings eine Einfügungsdämpfung von etwa 1 dB und mehr mit sich. Die Erfindung zeigt demgegenüber einen Weg zu eine besonders einfachen, kostengünstigen Erstellung eines Filters mit verrigerter Einfügungsdämpfung.

Die Erfindung betrifft ein Verfahren zur Herstellung eines optischen Weichenbausteins (WDM-Coupler) mit zwei miteinander fluchtenden, durch eine schräg zur gemeinsamen Achse angeordnete wellenlängenselektive Strahlteilerschicht voneinander getrennten Lichtleitfasern sowie einer schräg zu den fluchtenden Lichtleitfasern verlaufenden, mit ihrer Achse die genannte gemeinsame Achse in Höhe der wellenlängenselektiven Strahlteilerschicht schneidenden und in eine Reflexionsrichtung der Strahlteilerschicht ausgerichteten weiteren Lichtleitfaser; dieses Verfahren ist erfindungsgemäß dadurch gekennzeichnet, daß an der an einen opto/elektrischen Wandler (Empfangsbaustein) anzukoppelnden Lichtleitfaser-Stirnfläche der mit der Lichtleitfaser, an der die schräg verlaufende Lichtleitfaser anliegt, fluchtenden Lichtleitfaser eine Filterschicht mit einer der Transmissionscharakteristik der Strahlteilerschicht des Weichenbausteins entsprechenden Transmissionscharakteristik in ein und demselben Fertigungsschritt mit der Strahlteilerschicht aufgedampft wird.

Die Erfindung bringt damit, daß der Weichenbaustein selbst an der angegebenen Lichtleitfaser-Stirnfläche mit einer Filterschicht der angegebenen Filtercharakteristik versehen wird, indem diese Filterschicht in ein und demselben Fertigungsschritt mit der Strahlteilerschicht aufgedampft wird, den Vorteil einer sehr kostengünstigen Erstellung eines Filters mit sich, durch das die Trennschärfe des Weichenbausteins ohne zusätzliches Bandfilterplättchen une ohne dessen relativ hohe Einfügungsdämpfung angehoben wird: Durch die Filterschicht kann das optische Nebensprechen um wenigstens 15 dB erhöht werden, wobei die Einfügungsdämpfung nur um etwa 0,1...0,4 dB zunehmen wird.

Es sei an dieser Stelle bemerkt, daß ein Aufdampfen eines zusätzlichen Farbfilters (aus DE—OS 2840493=US-PS 4339170) an sich bekannt ist; dabei geht es jedoch um ein Bedampfen einer zusätzlichen Gradientenlinse vor oder nach deren Befestigung am optischen Weichenbaustein und jedenfalls nicht zugleich mit dem Aufdampfen von dessen Strahlteilerschicht.

Um demgegenüber auf die Erfindung zurückzukommen, so kann zur weiteren Erhöhung der Trennschärfe in einem zusätzlichen Bedampfungsvorgang die Filterschicht nach Maßgabe des (mittleren) Einfallswinkels der in der Empfangs-Lichtleitfaser geführten Lichtstrahlung noch optimiert werden. Alternativ dazu kann in weiterer Ausgestaltung der Erfindung aber auch der Weichenbaustein selbst so ausgebildet werden, daß auch die hintere Stirnfläche der Empfangs-Lichtleitfaser parallel zur Strahlteilerschicht verläuft; dies bringt den Vorteil mit sich, daß bei vom Bedampfungsprozeßschritt her optimierter Strahlteilerschicht die im selben Fertigungsschritt aufgedampfte Filterschicht insoweit ebenfalls optimiert ist.

Anhand der Zeichnung wird die Erfindung noch näher erläutert. Dabei zeigt

Fig. 1 einen optischen Weichenbaustein bekannten Aufbaus;

Fig. 2 verdeutlicht einige Prozeßschritte bei der Herstellung optischer Weichenbausteine.

Fig. 3 zeigt einen optischen Weichenbaustein gemäß der Erfindung, und

Fig. 4 verdeutlicht daz einige Fertigungsprozeßschritte.

Fig. 5 zeigt ein bidirektionales Lichtwellenleiter-Übertragungssystem mit optischen Weichenbausteinen gemäß der Erfindung, und

Fig. 6 zeigt ein Schema zugehöriger Filtercharakteristiken.

In Fig. 1 ist schematisch ein bekannter optischer Weichenbaustein W dargestellt, in dem drei Lichtleitfasern 1, 2, 3 vorgesehen sind, nämlich zwei miteinander fluchtende Lichtleitfasern 1, 3, die durch eine schräg zur gemeinsamen Achse angeordnete wellenlängenselektive Strahlteilerschicht F voneinander getrennt sind, und eine schräg dazu verlaufende, mit ihrer Achse die genannte gemeinsame Achse in Höhe der Strahlteilerschicht F schneidende Lichtleitfaser 2, die in eine Reflexionsrichtung der Strahlteilerschicht ausgerichtet ist. Die Strahlteilerschicht möge dabei ein aus mehreren $SiO_2$- und $TiO_2$-Schichten bestehendes wellenlängenselektives Interferenzfilter sein, das im Hochvakuum auf die schräge Stirnfläche der Lichtleitfaser 1 im Verlaufe eines Herstellungsprozesses aufgedampft worden ist, der in einigen Prozeßschritten aus Fig. 2 deutlich wird:

Fig. 2a) läßt Lichtleitfasern 3-1, 2 erkennen, die in V-förmige Nuten von Quarzglas-Prismen und -Quadern Qg oder von auf diese aufgekitteten Siliziumscheiben Si eingelegt sind; durch Verkitten werden diese Teile zu einem Block zusammengefügt. Dieser Block wird danach in zwei Teile gemäß Fig. 2b) getrennt, und es wird nach Polieren der Schnittflächen auf die in Fig 2b) mit F bezeichnete Fläche das Interferenzfilter aufgedampft. Die beiden Blockteile werden dann zueinander justiert wieder zu einem Block verkittet, woraufhin von dem facettierten und polierten Block scheibenweise jeweils ein optischer Weichenbaustein abgetrennt werden kann, wie dies Fig. 2c) verdeutlicht.

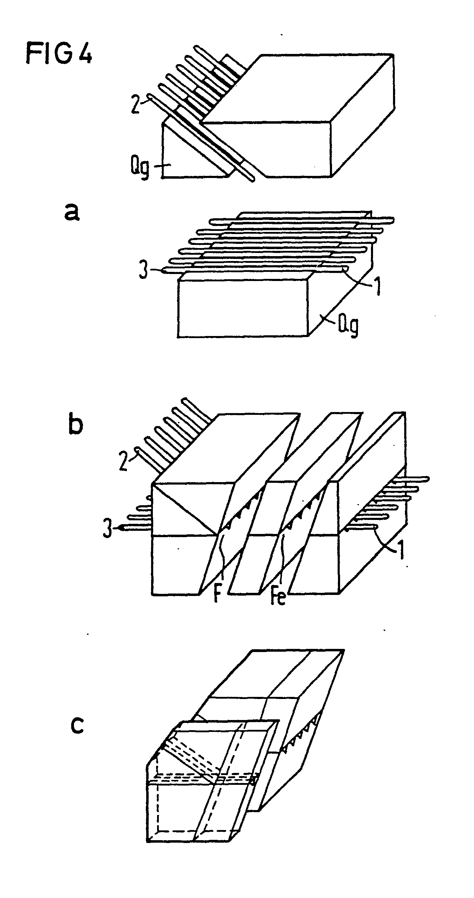

In dem in Fig. 3 skizzierten optischen Weichenbaustein W ist nun an der an einen opto/elektrischen Wandler (Empfangsbaustein) anzukoppelnden Lichtleitfaser-Stirnfläche 10 der Lichtleitfaser 1 eine Filterschicht Fe aufgebracht, deren Transmissionscharakteristik derjenigen der Strahlteilerschicht F des Weichenbausteins W entspricht. Diese Filterschicht Fe wird ebenso wie die Strahlteilerschicht F aufgedampft, wobei das Aufdampfen der Strahlteilershicht F auf den in Fig. 2b) links dargestellten Blockteil und das Aufdampfen der Filterschicht Fe auf den in Fig. 2b) rechts dargestellten Teil in ein und demselben Fertigungsschritt durchgeführt wird, so daß in dem in Fig. 2 skizzierten Fertigungsablauf für die Filterschicht Fe die gleiche Abfolge und Dicke der einzelnen dielektrischen Schichten aus $SiO_2$ und $TiO_2$ erzielt wird wie für die Strahlteilerschicht F.

Die Strahlteilerschicht F pflegt so bemessen zu sein, daß bei dem bei ihr gegebenen (mittleren) Lichteinfallswinkel die Transmission des einen Lichtstrahls und Reflexion des anderen Lichtstrahls optimiert sind. Eine entsprechende Optimierung der Transmission des genannten einen Lichtstrahls in der Filterschicht Fe wird dadurch erreicht, daß, wie dies auch aus Fig. 3 ersichtlich ist, die die Filterschicht Fe tragende Lichtleitfaser-Stirnfläche 10 parallel zur Strahlteilerschicht F verläuft. Hierzu kann der in Fig. 2 verdeutlichte Fertigungsprozeß in einer Weise erweitert sein, wie dies aus Fig. 4 deutlich wird:

Fig. 4a) läßt wieder Lichtleitfasern 3-1, 2 erkennen, die in V-förmige Nuten von Quarzglas-Prismen und -Quadern Qg—oder auch von auf diese aufgekitteten Siliziumscheiben—eingelegt sind; durch Verkitten werden diese Teile zu einem Block zusammengefügt. Dieser Block wird danach in drei Teile gemäß 4b) getrennt, und es wird nach Polieren der Schnittflächen auf die in Fig. 4b) mit F bezeichnete Fläche das Interferenzfilter und auf die in Fig. 4b) mit Fe bezeichnete Fläche eine Filterschicht gleicher Transmissionscharakteristik aufgedampft. Die beiden so mit Filterschichten bedampften Blockteile werden zueinander justiert wieder zu einem Block verkittet, woraufhin von dem facettierten und polierten Block scheibenweise jeweils ein optischer Weichenbaustein abgetrennt werden kann, wie dies Fig. 4c) verdeutlicht.

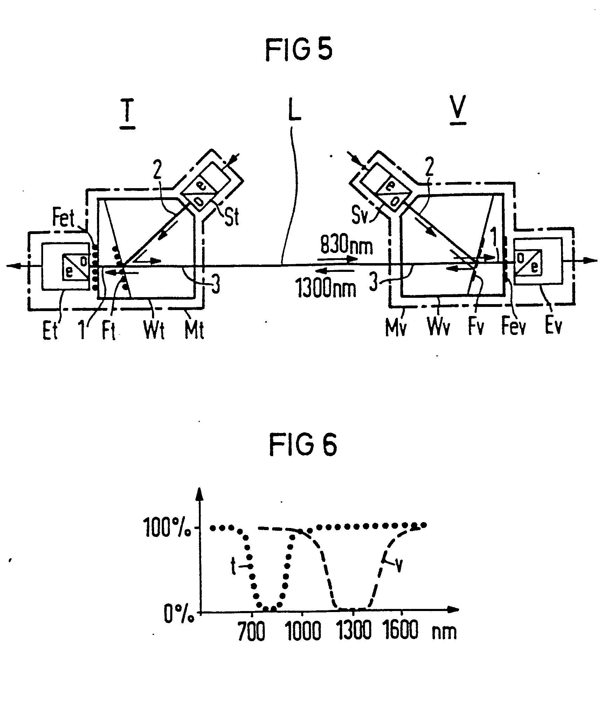

Ein solcher optischer Weichenbaustein kann inbesondere in einem Lichtwellenleiter-Übertragungssystem Anwendung finden, wie es in Fig. 5 skizziert ist:

In dem in Fig. 5 skizzierten Lichtwellenleiter-Übertragungssystem mit im bidirektionalen Wellenlängenmultiplex betriebener Lichtwellenleiter-Strecke L weisen an deren beiden Enden T, V vorgesehene elektrisch-optischen Sende-Empfangs-Module Mt, Mv eine einheitliche Struktur auf: Die jeweils einen elektro/optischen Wandler enthaltenden Sendebaustein St und Sv sind jeweils an die gleiche Lichtleitfaser des jeweiligen Weichenbausteins Wt bzw. Wv angekoppelt, und zwar jeweils an die schräg verlaufende Lichtleitfaser 2, die an der an die Lichtwellenleiter-Strecke L angekoppelten Lichtleitfaser 3 anliegt. Ebenso sind die jeweils einen opto/elektrischen Wandler enthaltenden Empfangsbausteine Et und Ev jeweils an die gleiche Lichtleitfaser des jeweiligen Weichenbausteins Wt bzw. Wv angekoppelt, und zwar jeweils an die Lichtleitfaser 1, die mit der an die Lichtwellenleiter-Strecke L angekoppelten Lichtleitfaser 3 fluchtet. Dabei sind, wie dies auch in Fig. 5 angedeutet ist, die beiden Weichenbausteine Wt und Wv mit in ihrer Strahlteilereigenschaft zueinander gewissermaßen komplementären Strahlteiler-Schichten Ft bzw. Fv versehen, d.h. ihre Filtercharakteristiken sind den beiden für die beiden Übertragungsrichtungen verwendeten Lichtwellenlängen von im Beispiel etwa 830 nm und 1300 nm entsprechend gegeneinander versetzt: Im Beispiel hat die Strahlteiler-Schicht Ft des optischen Weichenbausteins Wt, wie dies etwa die Kurve t in Fig. 6 zeigt, eine maximale Transmission im Bereich um 1300 nm und eine maximale Reflexion im Bereich um 830 nm; die Strahlteiler-Schicht Fv hat, wie dies etwa die Kurve v in Fig. 6 zeigt, eine maximale Transmission im Bereich um 830 nm, und eine maximale Reflexion im Bereich um 1300 nm. Diese Eigenschaften werden beim Aufdampfen der Filterschicht durch entsprechend unterschiedliche Abfolge und Dicke der einzelnen dielektrischen Schichten auf $SiO_2$ und $TiO_2$ erzielt, ohne daß damit grundsätzliche Änderungen des in Fig. 4 skizzierten Fertigungsablaufs verbunden sind. Entsprechendes gilt auch für die jeweilige zusätzliche Filterschicht Fet bzw. Fev an der an den jeweiligen Empfangsbaustein Et bzw. Ev angekoppelten Lichtleitfaser-Stirnfläche, deren Transmissionscharakteristik jeweils derjenigen der Strahlteilerschicht Ft bzw. Fv desselben Weichenbausteins Wt bzw. Wv entspricht.

## Patentansprüche

1. Verfahren zur Herstellung eines optischen Weichenbausteins (WDM-Coupler) (W) mit zwei miteinander fluchtenden, durch eine schräg zur gemeinsamen Achse angeordnete wellenlängenselektive Strahlteilerschicht (F) voneinander getrennten Lichtleitfasern (1, 3) sowie einer schräg zu den fluchtenden Lichtleitfasern (1, 3) verlaufenden, mit ihrer Achse die genannte gemeinsame Achse in Höhe der wellenlängenselektiven Strahlteilerschicht (F) schneidenden und in eine Reflexionsrichtung der Strahlteilerschicht (F) ausgerichteten weiteren Lichtleitfaser (2), dadurch gekennzeichnet, daß an der an einen opto/elektrischen Wandler (Empfangsbaustein) anzukoppelnden Lichtwellenleitfaser-Stirnfläche (10) der mit der Lichtleitfaser (3), an der die schräg verlaufende Lichtleitfaser (2) anliegt, fluchtenden Lichtleitfaser (1) eine Filterschicht (Fe) mit einer der Transmissionscharakteristik der Strahlteilerschicht (F) des Weichenbausteins (W) entsprechenden Transmissionscharakteristik in ein und demselben Fertigungsschritt mit der Strahlteilerschicht (F) aufgedampft wird.

2. Verfahren nach Anspruch 1, dadurch gekennzeichnet, daß die die Filterschicht (Fe) tragende Lichtleitfaser-Stirnfläche (10) parallel zur Strahlteilerschicht (F) verläuft.

3. Verfahren nach Anspruch 1, dadurch gekennzeichnet, daß in einem zusätzlichen Bedampfungsvorgang die Filterschicht (Fev, Fet) nach Maßgabe des mittleren Einfallswinkels der in der Empfangs-Lichtleiterfaser geführten Lichtstrahlung optimiert wird.

## Revendications

1. Procédé pour fabriquer un module d'aiguillage optique (coupleur WDM) (W) comportant deux fibres optiques (1, 3) alignées entre elles et séparées l'une de l'autre par une couche formant diviseur de faisceau (F), disposée obliquement par rapport à l'axe commun et sélective du point de vue des longueurs d'onde, ainsi qu'une autre fibre optique (2), qui est disposée obliquement par raport aux fibres optiques alignées (1,3), coupe par son axe ledit axe commun au niveau de la couche formant diviseur de faisceau (F) sélective du point de vue des longueurs d'onde, et est orientée dans une direction de réflexion de la couche formant diviseur de faisceau (F), caractérisé par le fait que sur la face frontale (10), qui doit être couplée à un transducteur opto-électrique (module de réception), de la fibre optique (1) alignée avec la fibre optique (3), contre laquelle est appliquée la fibre optique oblique (2), on dépose, lors de la même étape de fabrication que la couche formant diviseur de faisceau (F), une couche formant filtre (Fe) possédant une caractéristique de transmission correspondant à la caractéristique de transmission de la couche formant diviseur de faisceau (F) du module d'aiguillage (W).

2. Procédé suivant la revendication 1, caractérisé par le fait que la face frontale (10) de la fibre optique, qui porte la couche formant filtre (Fe), est parallèle à la couche formant diviseur de faisceau (F).

3. Procédé suivant la revendication 1, caractérisé par le fait que, lors d'une étape supplémentaire de dépôt par evaporation, on optimise la couche formant filtre (Fev, Fet) en fonction de l'angle d'incidence moyen de la lumière guidée dans la fibre optique de réception.

## Claims

1. Method of manufacturing an optical filter element (WDM coupler) (W) having two mutually aligned optical fibres (1, 3) separated from one another by a wavelength-dependent beam-splitter layer (F) arranged at an incline with respect to the common axis, and also a further optical fibre (2) which extends at an incline with respect to the aligned optical fibres (1, 3), intersects with its axis the aforesaid common axis at the level of the wavelength-dependent beam-splitter layer (F), and is directed in a reflection direction of the beam-splitter layer (F), characterized in that a filter layer (Fe) having a transmission characteristic corresponding to the transmission characteristic of the beam-splitter layer (F) of the filter element (W) is vapour-deposited in one and the same manufacturing step with the beam-splitter layer (F) on the optical fibre end face (10), to be coupled to an optoelectric transducer (receiving element), of the optical fibre (1) aligned with the optical fibre (3), against which the obliquely extending optical fibre (2) lies.

2. Method according to Claim 1, characterized in that the optical fibre end face (10) bearing the filter layer (Fe) runs parallel to the beam-splitter layer (F).

3. Method according to Claim 1, characterized in that, in an additional vapour-deposition process, the filter layer (Fev, Fet) is optimized in accordance with the average angle of incidence of the light radiation carried in the receiving optical fibre.

FIG 1

FIG 3

FIG 2

a

b

c

FIG 4

a

b

c

# FIG 5

T          L          V

# FIG 6